(19) 

Europäisches
Patentamt
European
Patent Office
Office européen
des brevets

(11) **EP 3 200 038 A1**

(12) **EUROPEAN PATENT APPLICATION**
published in accordance with Art. 153(4) EPC

(43) Date of publication:
**02.08.2017 Bulletin 2017/31**

(21) Application number: **15845135.1**

(22) Date of filing: **17.09.2015**

(51) Int Cl.:
**G05B 23/02** *(2006.01)*     **G05B 17/02** *(2006.01)*

(86) International application number:
**PCT/JP2015/004758**

(87) International publication number:
**WO 2016/047118 (31.03.2016 Gazette 2016/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **26.09.2014   JP 2014197161**

(71) Applicant: **NEC Corporation
Tokyo 108-8001 (JP)**

(72) Inventor: **KUSUMOTO, Manabu
Tokyo 108-8001 (JP)**

(74) Representative: **Vossius & Partner
Patentanwälte Rechtsanwälte mbB
Siebertstrasse 3
81675 München (DE)**

(54) **MODEL EVALUATION DEVICE, MODEL EVALUATION METHOD, AND PROGRAM RECORDING MEDIUM**

(57)     With respect to a prediction control model, the degree to which a control object can be controlled by manipulation of a manipulated variable is evaluated. A model evaluation device is provided with: a model accumulation means that stores a model indicating the relevance of a first variable which is a control input parameter, a second variable which is a control purpose, and a third variable representing a control operation environment; and a relationship computation means that calculates a relationship level indicating the degree of influence that the first variable has on the second variable in the model.

Fig.1

**Description**

[Technical Field]

The present invention relates to a model evaluation device, a model evaluation method, and a program recording medium, and particularly, relates to a model evaluation device, a model evaluation method, and a program recording medium that perform effective model evaluation in selecting a model from a plurality of models.

[Background Art]

Predictive control is control that predicts an amount to be controlled in the future based on a dynamic model of a process and determines a manipulation amount. Features of the predictive control include easiness of multivariable control, easiness of consideration of constraints, and easy and intuitive adjustment.

The predictive control has been utilized mainly for plant control in a petrochemical industry. With recent advancement of computer performance, the predictive control is not only applied to plant control in a petrochemical industry, but also applied to a mobile object and a robot with a short control cycle.

In the predictive control, a designer may describe a predictive control model in advance based on physical laws, such as an equation of motion, a thermal equation, a law of conservation of mass, a law of conservation of momentum, and a law of conservation of energy. However, it is difficult for a designer to consider all of the physical laws and derive a predictive control model so as to completely reflect complex correlation in a real world.

For example, in a case of room air-conditioning control, a plurality of manipulated variables such as an air-conditioner temperature, an air-conditioner air volume, a blind opening degree, and a window opening degree give influence on a plurality of control variables such as an indoor temperature and an indoor humidity. In addition, there is generally interference between the control variables, for example, increasing temperature leads to decrease humidity. Further, environment variables such as an outdoor temperature and an outdoor humidity give influence on the control variables. Thus, it is difficult for a designer to create a complete model of relationship among a manipulated variable, a control variable, and an environment variable that mutually give influence.

In order to solve the problem, a method of generating a predictive control model by machine learning has been proposed. For example, NPL 1 discloses a method of obtaining a model indicating relationship between a control target and a manipulated variable or an environment variable.

PTL 1 discloses an equipment control method of creating a predictive model representing relationship between an operation and a specified sensor by using machine learning. A device therefor references a created predictive model and determines an operation such that a target sensor output becomes a target value.

PTL 2 discloses a method of collecting pieces of past information on an object that is difficult to create a model, such as a last-minute state of an occupant, machine-learning the pieces of information, and correcting a control expression.

PTL 3 discloses a performance prediction device that adjusts a parameter of a model, based on a difference between an output predicted by using the model and an actual output.

A device that generates a model by machine learning generates different models depending on a given initial condition or parameter. The device that generates models by machine learning selects a model to be used by evaluating the models created by the machine learning, based on an information criterion such as Akaike's Information Criterion (AIC), as disclosed in PTL 2. In other words, the device selects a model to be used based on balance between the number of variables and likelihood of models.

[Citation List]

[Patent Literature]

[PTL 1] International Publication WO 2005/083531
[PTL 2] Japanese Patent No. 4821536
[PTL 3] International Publication WO 2013/183425

[Non Patent Literature]

[NPL 1] "Fully-Automatic Bayesian Piecewise Sparse Linear Models," Riki Eto, Ryohei Fujimaki, Satoshi Morinaga, Hiroshi Tamano; JMLR Workshop and Conference Proceedings vol.33: pp.238-246, 2014

[Summary of Invention]

[Technical Problem]

As described in PTL 2, when a model is selected based on an information criterion, the model may not sometimes include a manipulated variable for manipulating a control target.

For example, in a case of air-conditioning control, a manipulated variable that can be directly manipulated is limited to an air-conditioner temperature, an air volume, or the like. However, when a model is selected based on an information criterion, the selected model may sometimes be constituted of only environment variables such as an outdoor temperature that cannot be directly manipulated. The model has a problem that a control target cannot be controlled by manipulation of a manipulated variable since an output from the model does not change even by manipulating an operable manipulated variable.

Accordingly, what is important in order to select a model from a plurality of models and perform predictive control is to select a model capable of controlling a control target by manipulation of a manipulated variable.

In order to solve the above-described problem, an objective of the present invention is to provide a model evaluation device, a model evaluation method, and a program recording medium that evaluate a degree to which a model is capable of controlling a control target by manipulation of a manipulated variable.

[Solution to Problem]

A model evaluation device according to one embodiment of the present invention includes model accumulation means that stores a model indicating relevance among a first variable that is an input parameter of control, a second variable that is a target of the control, and a third variable representing an operation environment of the control, and relationship computation means that calculates a relationship indicating a degree of influence given on the second variable by the first variable in the model.

A model evaluation method according to one embodiment of the present invention includes storing a model indicating relevance among a first variable that is an input parameter of control, a second variable that is a target of the control, and a third variable representing an operation environment of the control, and calculating a relationship indicating a degree of influence given on the second variable by the first variable in a model.

A computer-readable program recording medium according to one embodiment of the present invention records a program for causing a computer to execute processing of storing a model indicating relevance among a first variable that is an input parameter of control, a second variable that is a target of the control, and a third variable representing an operation environment of the control, and processing of calculating a relationship indicating a degree of influence given on the second variable by the first variable in the model.

[Advantageous Effects of Invention]

The present invention enables evaluation of a degree to which a predictive control model is capable of controlling a control target by manipulation of a manipulated variable.

[Brief Description of Drawings]

Fig. 1 is a block diagram illustrating an example of a configuration of a model evaluation device according to a first example embodiment;
Fig. 2 is a block diagram illustrating an example of a configuration of a model evaluation device according to a second example embodiment;
Fig. 3 is a block diagram illustrating an example of a configuration of a model evaluation device according to a third example embodiment;
Fig. 4 is a block diagram illustrating an example of a configuration of a model evaluation device according to a fourth example embodiment;
Fig. 5 is a flowchart illustrating an example of an operation of a learning generation unit;
Fig. 6 is a diagram illustrating an example of a model generated by a learning generation unit; and
Fig. 7 is a block diagram illustrating an example of a hardware configuration of a computer device 500 that implements each of the above-described model evaluation devices 100, 200, 300, and 400.

[Example Embodiments]

Next, example embodiments for carrying out the invention are described in detail with reference to the drawings.

Note that each of the drawings is for describing the example embodiments of the present invention. Thus, the present invention is not limited to the description of each of the drawings. In addition, the same numeral is assigned to the configuration that is similar in each of the drawings, and repeated description thereof may sometimes be omitted. In addition, a direction of an arrow in a block diagram is for indicating an example and is not intended to limit a direction of a signal between blocks. In addition, in the drawings to be used for the following description, description about a configuration of a part irrelevant to the description of the present invention is omitted, and the configuration may not sometimes be illustrated.

<First Example Embodiment>

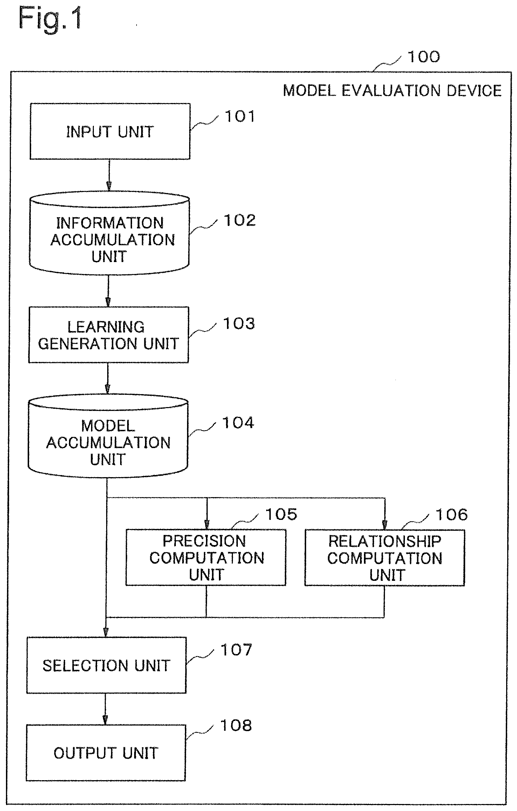

Fig. 1 illustrates a configuration of a model evaluation device 100 according to a first example embodiment of the present invention.

The model evaluation device 100 generates a model for performing predictive control of a control target variable, for example, a room temperature, and outputs the model to, for example, a control device (not illustrated). The control device controls a control target device (not illustrated), such as an air conditioner, a blind opener and closer, or a window opener and closer by using a model output from the model evaluation device 100, and brings a control target variable close to a target value.

A manipulated variable is an input parameter for controlling the control target variable. The control device is able to input a value of the manipulated variable to the control target device. The control device is able to determine only the value of the manipulated variable. When the control target variable is a room temperature, the control target device is an air conditioner, a blind opener and closer, or a window opener and closer. The manipulated variable is, for example, an air-conditioner temperature, an air-conditioner air volume, a degree of blind opening and closing, or a degree of window opening.

The model evaluation device 100 includes an input unit 101, an information accumulation unit 102, a learning generation unit 103, a model accumulation unit 104, a precision computation unit 105, a relationship computation unit 106, a selection unit 107, and an output unit 108.

The input unit 101 acquires a value of the control target variable, a value of the manipulated variable at the time, and besides, input data including peripheral data that is possibly relevant to the value of the control target variable. The peripheral data is, for example, an outdoor temperature and an outdoor humidity.

The input unit 101 acquires input data from, for example, a user interface device such as a keyboard, a mouse, or a touch panel, a storage medium such as a memory or a disk, or an external device via a network. The input unit 101 saves the acquired input data in the information accumulation unit 102 in time-series order, for example. In other words, the input unit 101 accumulates a history of the input data in the information accumulation unit 102.

The learning generation unit 103 creates a model or models from history data saved in the information accumulation unit 102 by performing machine learning.

The model is an expression for calculating a value of the manipulation target variable at a certain point in time t1 from values of past, present, and future manipulated variables when seen from t1 and past and present peripheral data. The learning generation unit 103 takes in a model peripheral data as a value of an environment variable. By using the model, the control device is able to predict what value the manipulation target variable will take from values of manipulated variables and peripheral data.

There are proposed various approaches of the machine learning. The learning generation unit 103 may use any of the approaches. The learning generation unit 103 may use, for example, a method of using a regression tree, a method of using a support vector machine, a method of using Bayesian linear regression, or a method of using a heterogeneous mixture learning technology.

The learning generation unit 103 generates different models depending on a given initial condition or the like. Thus, the learning generation unit 103 repeats the machine learning based on the history data accumulated in the information accumulation unit 102 while switching an initial condition or the like, and generates a plurality of models.

The learning generation unit 103 accumulates the created plurality of models in the model accumulation unit 104.

The precision computation unit 105 and the relationship computation unit 106 evaluate a model accumulated in the model accumulation unit 104. The precision computation unit 105 calculates a precision representing an accuracy of the model based on an information criterion. The relationship computation unit 106 calculates a relationship representing a degree of influence given on a control target variable by the manipulated variable.

The precision computation unit 105 calculates the information criterion of the model. The precision computation unit 105 may perform the calculation by using any of proposed methods including the aforementioned AIC, Bayesian Information Criterion, Akaike's Bayesian Information Criterion, Minimum Description Length, and Fractal Information Criterion.

The relationship computation unit 106 quantifies relationship between the manipulated variable and the control target variable. The relationship computation unit 106 may perform the evaluation by using any of several existing methods.

The relationship computation unit 106 may count kinds of manipulated variables included in variables of the model (models) and define the counted number as the relationship. The relationship computation unit 106 may sum up points respectively defined for the manipulated variables included in variables of the model and define the sum as the relationship.

In addition, the relationship computation unit 106 may perform determination of controllability of the model and define the controllability as the relationship. The relationship computation unit 106 may define a degree of change in the control target variable when the manipulated variable is changed in the model as the relationship.

The relationship computation unit 106 may obtain the relationship by quantifying relationship between the manipulated variable and the control target variable using another method.

The selection unit 107 selects a best-evaluated model based on both a computation result of the precision computation unit 105 and a computation result of the relationship computation unit 106, acquires the model from the model accumulation unit 104, and outputs the best-evaluated model. In other words, the selection unit 107 selects a model that is accurate and correctly reflects a behavior of the control target variable and whose control target variable is controllable by the control device through adjustment of the manipulated variable.

Specifically, the selection unit 107 performs operation using two indexes that are computation results of the precision computation unit 105 and the relationship computation unit 106, and selects a model based on a result of the operation. The selection unit 107 may multiply the respective indexes by a weight coefficient and add up the multiplied indexes. The selection unit 107 may multiply one of the indexes by another one. Further, the selection unit 107 may select, from among models for which one of the two indexes exceeds a certain number, a model for which another one of the indexes is the best.

The selection unit 107 may perform operations such as logarithmic, averaging and power operation by using two indexes, in other words, perform calculation using indexes as evaluation values, and may select a model based on a result of the calculation.

Finally, the output unit 108 outputs a model selected by the selection unit 107. The output unit 108 transmits the model to, for example, a control device. The output unit 108 may output the model to an output device such as a display or a printer, a storage device such as a memory or a disk, or a network.

The input unit 101, the learning generation unit 103, the precision computation unit 105, the relationship computation unit 106, the selection unit 107, and the output unit 108 each are configured by a logic circuitry. The input unit 101, the learning generation unit 103, the precision computation unit 105, the relationship computation unit 106, the selection unit 107, or the output unit 108 may be implemented by a program that is executed by a processor (not illustrated) of the model evaluation device 100 as a computer. In this case, the program is stored in a memory (not illustrated) of the model evaluation device 100.

The information accumulation unit 102 and the model accumulation unit 104 each are a disk device or a storage medium such as a semiconductor memory.

[Description of Advantageous Effects]

The model evaluation device 100 according to the present example embodiment is able to select a model including a control target variable that is controllable by the control device through adjustment of the manipulated variable from among a plurality of models. The reason is that the relationship computation unit 106 calculates a relationship representing a degree of influence given on the control target variable by the manipulated variable.

The model evaluation device 100 according to the present example embodiment is able to select a model that is accurate and correctly reflects a behavior of a control target variable, in addition to the above. The reason is that the precision computation unit 105 calculates a precision representing an accuracy of a model based on an information criterion.

<Modification of First Example Embodiment>

The model evaluation device 100 may not necessarily include the input unit 101, the information accumulation unit 102, the learning generation unit 103, the precision computation unit 105, the selection unit 107, or the output unit 108. Model generation, precision evaluation, and model selection may be performed by another device.

In this case, the model evaluation device 100 may receive a model created by the another device and store the model in the model accumulation unit 104, and the relationship computation unit 106 may calculate a relationship and output the relationship to the another device.

In this case, calculation of a precision of a model and model selection based on the precision and the relationship are performed by the another device.

<Second Example Embodiment>

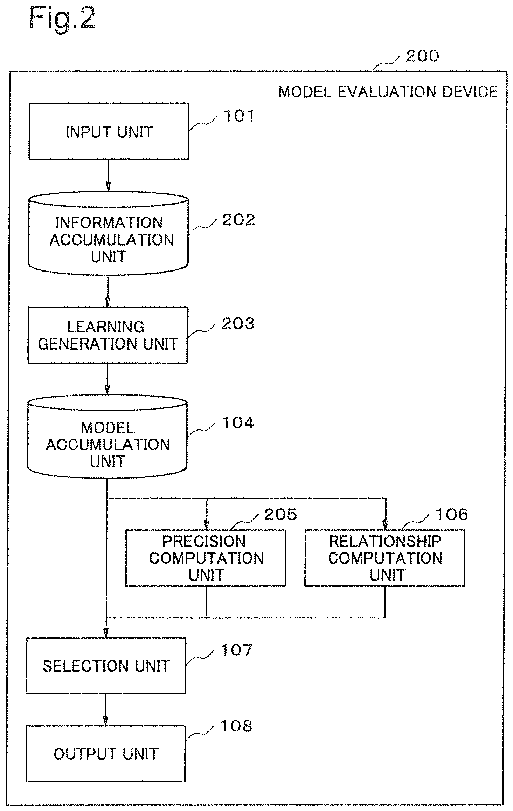

Fig. 2 illustrates a configuration of a model evaluation device 200 according to a second example embodiment. A precision computation unit 205 of the model evaluation device 200 according to the present example embodiment calculates a precision of a model by using a method different from that used in the precision computation unit 105 according to the first example embodiment.

The model evaluation device 200 includes an input unit 101, an information accumulation unit 202, a learning generation unit 203, a model accumulation unit 104, the precision computation unit 205, a relationship computation unit 106, a selection unit 107, and an output unit 108.

Fig. 2 indicates parts for performing operations substantially similar to those of the first example embodiment with the same numerals as in Fig. 1. Description of these parts will be omitted. The following describes parts different from those of the first example embodiment.

The information accumulation unit 202 stores two sets of histories of input data. The two sets of histories are a history for model creation and a history for model evaluation. However, the two sets of histories are not necessarily two histories physically separated from each other. For example, there may be one history file in which a history at an odd time such as 1, 3, or 5 o'clock is for creation and a history at an even time such as 2, 4, or 6 o'clock is for evaluation.

The learning generation unit 203 performs an operation equivalent to that of the learning generation unit 103 according to the first example embodiment. However, the learning generation unit 203 creates a model by using a history for creation among data in the information accumulation unit 202. The learning generation unit 203 does not use a history for evaluation.

The precision computation unit 205 performs evaluation of a model accumulated in the model accumulation unit 104 by using a history for evaluation. Specifically, the precision computation unit 205 extracts, from a history for evaluation, values of a manipulated variable, an environment variable, and a control variable included in a calculation expression for a control target variable of a model, substitutes the values for a calculation expression for a model, and calculates a predicted value of the control target variable. Thereafter, the precision computation unit 205 calculates an error between the predicted value of the control target variable and the value of the control variable included in the history for evaluation, and defines, for example, a reciprocal of an absolute value of the error as a precision of the model.

The input unit 101, the learning generation unit 203, the precision computation unit 205, the relationship computation unit 106, the selection unit 107, and the output unit 108 each are configured by a logic circuitry. The input unit 101, the learning generation unit 203, the precision computation unit 205, the relationship computation unit 106, the selection unit 107, or the output unit 108 may be implemented by a program that is executed by a processor (not illustrated) of the model evaluation device 200 as a computer. In this case, the program is stored in a memory (not illustrated) of the model evaluation device 200.

The information accumulation unit 202 and the model accumulation unit 104 each are a disk device or a storage medium such as a semiconductor memory.

[Description of Advantageous Effects]

The model evaluation device 200 according to the present example embodiment is able to select a model including a control target variable that is controllable by the control device through adjustment of a manipulated variable from among a plurality of models. The reason is that the relationship computation unit 106 calculates a relationship representing a degree of influence given on the control target variable by the manipulated variable.

The model evaluation device 200 according to the present example embodiment is able to select a model that is accurate and correctly reflects a behavior of a control target variable, in addition to the above. The reason is that the precision computation unit 105 calculates a precision representing an accuracy of a model based on an error caused by the model.

<Modification of Second Example Embodiment>

The model evaluation device 200 according to the present example embodiment can also be modified in a manner similar to that in the model evaluation device 100 according to the first example embodiment.

The model evaluation device 200 according to the present example embodiment may include, besides the precision computation unit 205, the precision computation unit 105 according to the first example embodiment. In this case, the selection unit 107 selects a model based on three evaluation values that are respectively output from the precision computation unit 205, the precision computation unit 105, and the relationship computation unit 106.

<Third Example Embodiment>

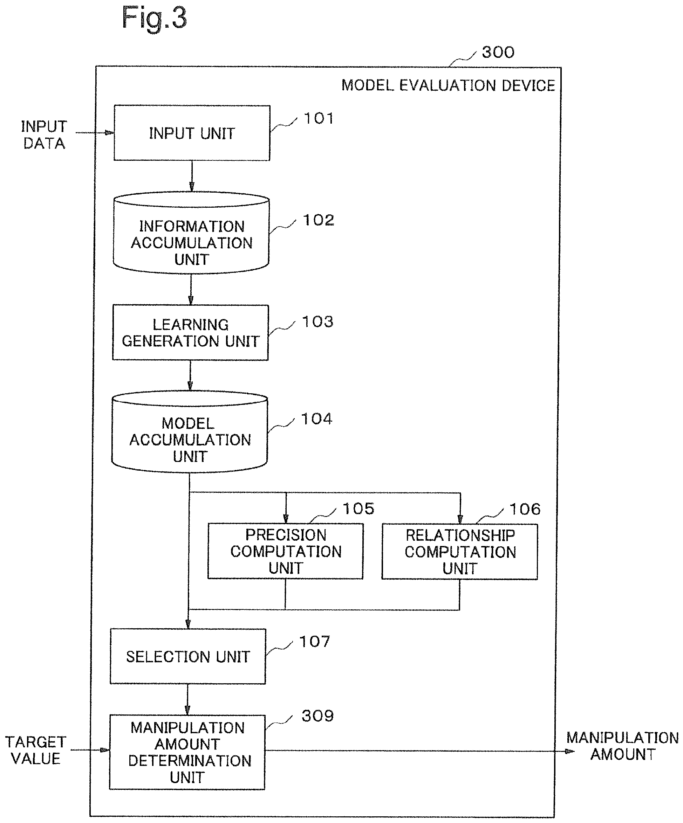

Fig. 3 illustrates a configuration of a model evaluation device 300 according to a third example embodiment. The model evaluation device 300 according to the present example embodiment includes, instead of the output unit 108 of the model evaluation device 100 according to the first example embodiment, a manipulation amount determination unit 309. The manipulation amount determination unit 309 is connected with a control target device.

The manipulation amount determination unit 309 performs control of the control target device based on a model selected by a selection unit 107. The manipulation amount determination unit 309 receives an externally input target value of a control target variable. The manipulation amount determination unit 309 calculates an amount of change of a manipulated variable necessary for bringing the control target variable close to the target value, and outputs the calculated amount of change to the control target device. At this time, the manipulation amount determination unit 309 may calculate an amount of change of a manipulated variable in accordance with a control theory of, for example, Proportional Integral Derivative (PID) control, an optimal regulator, or predictive control.

The manipulation amount determination unit 309 is configured by a logic circuitry. The manipulation amount determination unit 309 may be implemented by a program that is executed by a processor (not illustrated) of the model evaluation device 300 as a computer. In this case, the program is stored in a memory (not illustrated) of the model evaluation device 300.

The model evaluation device 300 according to the present example embodiment is able to be used as a control device that automatically generates an appropriate control model and operates a control target device in accordance with the model. The reason is that the manipulation amount determination unit 309 performs control of the control target device based on a model selected by the selection unit 107.

<Fourth Example Embodiment>

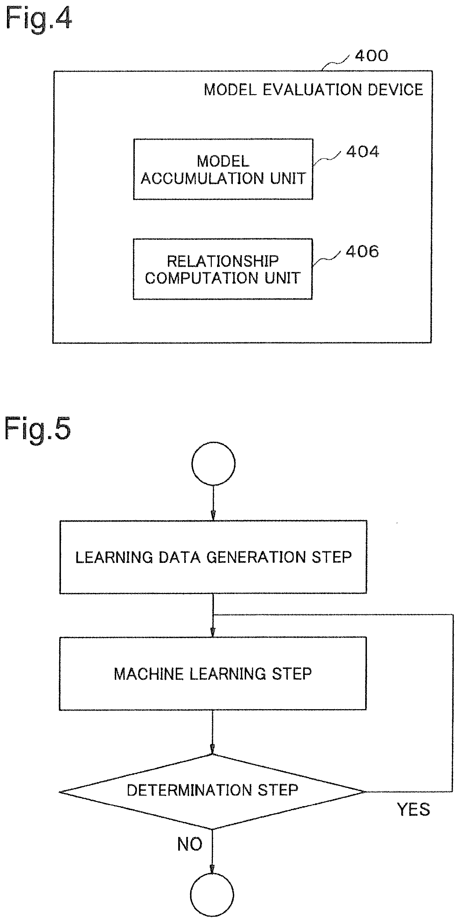

Fig. 4 illustrates a configuration of a model evaluation device 400 according to a fourth example embodiment. The model evaluation device 400 according to the present example embodiment includes a model accumulation unit 404 and a relationship computation unit 406.

The model accumulation unit 404 stores a model indicating relevance among a manipulated variable that is an input parameter of control, a control target variable that is a target of the control, and an environment variable representing an operation environment of the control. The relationship computation unit 406 calculates a relationship indicating a magnitude of influence given on a control target variable by a manipulated variable in a model.

The model evaluation device 400 according to the present example embodiment is able to select a model including a control target variable that is controllable by a control device through adjustment of a manipulated variable from among a plurality of models. The reason is that the relationship computation unit 406 calculates a relationship representing a degree of influence given on the control target variable by the manipulated variable.

<Description Based on Examples>

<Example of First Example Embodiment>

Next, the model evaluation device 100 according to the first example embodiment is described with use of a specific example. The example relates to control of an air-conditioning system.

First, a value of a manipulated variable and a value of a control target variable at each time, and besides, peripheral data, in other words, a value of an environment variable at the time are input to the input unit 101.

In the present example, the value of the manipulated variable is a value that is a manipulation object in an air-conditioning device, such as an air-conditioning air volume, a cooling intensity, an intake amount of outdoor air, and a humidifying intensity. In addition, the value of the control target variable is a value that is expected to be controlled by an air-conditioning device, such as an indoor temperature and an indoor humidity.

The value of the environment variable is a value that is possibly relevant to air conditioning, such as an outdoor temperature, an outdoor humidity, an amount of solar irradiance, a measured value of a motion sensor, a time, and a day of the week. These input data are input from, for example, a database in which data are recorded.

The input unit 101 accumulates input data sequentially in the information accumulation unit 102. For example, input data for past several months are accumulated in the information accumulation unit 102.

Next, the learning generation unit 103 creates a plurality of models based on the input data accumulated in the information accumulation unit 102. Fig. 5 is an operational flowchart of the learning generation unit 103.

First, the learning generation unit 103 acquires information necessary for machine learning from the information accumulation unit 102 at a learning data generation step. At this time, the learning generation unit 103 regards, as one collective data block, a value of a control target variable, a value of a manipulated variable, and a value of an environment variable at each time, and in addition thereto, a value of a manipulated variable, a value of a control target variable, and a value of an environment variable at each of times before and after the aforementioned time. The learning generation unit 103 arranges the data block in order of times to form a group of data blocks.

Next, the learning generation unit 103 learns relationship among a control target variable, a manipulated variable, and an environment variable from a data block at a machine learning step. The learning generation unit 103 stores a model obtained as a result of the machine learning in the model accumulation unit 104.

In addition, at this time, the learning generation unit 103 simultaneously obtains an evaluation value of the model such as an information criterion as a result of the machine learning, and saves the evaluation value in the model accumulation unit 104 as well.

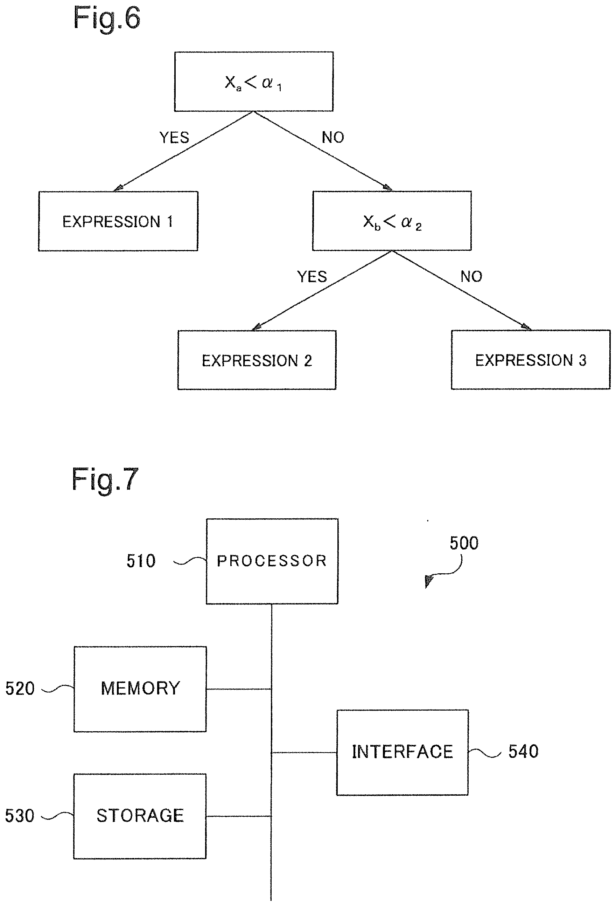

Fig. 6 illustrates an example of a model generated by the learning generation unit 103. The model includes an expression for calculating a value of a future control target variable from a value of a manipulated variable, an environment variable, or a control target variable. The model may include a plurality of expressions obtained by case division with several parameters and a branch condition for selecting an expression.

The branch condition includes several variables, for example, $x_a$ and $x_b$, and threshold values thereof $\alpha_1$ and $\alpha_2$. Herein, x is a manipulated variable, a control target variable, or an environment variable. A control device using a model determines, with each timing of performing a control, an expression for use in control at the time in accordance with the branch condition.

Expression (1) indicated below is an example of an expression included in a model.

$$y_1 = a_{11}x_1 + a_{21}x_2 + a_{31}x_3 + \cdots + a_{n1}x_n + b_1 \qquad \text{------} \quad (1)$$

Herein, $y_1$ is a future control target variable, and $x_1$ to $x_n$ each are a manipulated variable, a control target variable, or an environment variable. $a_{11}$ to $a_{n1}$ each are a coefficient obtained by machine learning. n is a natural number. $b_1$ is a constant. The learning generation unit 103 generates such a polynomial equation for each control target variable.

The learning generation unit 103 executes the machine learning step a plurality of times while switching conditions. For example, as illustrated in Fig. 5, the learning generation unit 103 repeats the machine learning step until a condition is satisfied at a determination step.

For example, when a plurality of sets of conditions for machine learning are given in advance, the learning generation unit 103 repeats the machine learning step until models are generated based on all the sets of conditions. The learning generation unit 103 may count, based on an evaluation value obtained by machine learning, a model whose evaluation value is equal to or greater than a certain value and repeat the machine learning step until the evaluation value exceeds a preset value of count. In addition, the learning generation unit 103 may execute the determination step by using a combination of these.

When the learning generation unit 103 completes repetition of the machine learning step, a plurality of models generated by the learning generation unit 103 are accumulated in the model accumulation unit 104.

Next, the precision computation unit 105 obtains an information criterion for each of the models. The precision computation unit 105 obtains, for example, a factorized information criterion (FIC). In the present example, the learning generation unit 103 calculates a FIC by using the method in NPL 1 when performing machine learning. The precision computation unit 105 extracts a result of the calculation from the model accumulation unit 104 and outputs the result as a precision.

Next, the relationship computation unit 106 calculates a relationship indicating relationship between a manipulated variable and a control target. In the present example, a model is generated by using the method in NPL 1 and includes a branch condition for selecting an expression and a coefficient to be multiplied to each of variables in an expression, as illustrated in Fig. 6 and Expression (1).

The relationship computation unit 106 may count the number of manipulated variables used in a model and output the number as a relation value. The manipulated variables used in a model indicate 1) a manipulated variable used in a conditional branch or 2) a manipulated variable with a coefficient of not "0" in an expression included in a model. In the model in Fig. 6, the relationship computation unit 106 counts "two" when $x_a$ and $x_b$ are manipulated variables and further counts the number of manipulated variables each with a coefficient of not "0" included in the expression.

The relationship computation unit 106 may sum up a coefficient to be multiplied to a manipulated variable and output the sum. For example, when an expression is Expression (1) above, the relationship computation unit 106 adds up magnitude (absolute value) of a coefficient $a_{n1}$ of each of manipulated variables and obtains a relation value.

The relationship computation unit 106 may perform addition of points corresponding to manipulated variables used in a model and output a value of the sum as a relation value. The points $c_n$ corresponding to manipulated variables are set in advance by an administrator in the model evaluation device 100 in conformity to, for example, importance of a manipulated variable and lowness of a manipulation cost. The relationship computation unit 106 may perform simple addition of points corresponding to manipulated variables and may perform addition with weight of a coefficient. When the relationship computation unit 106 performs addition of points $c_n$ with weight of a coefficient $a_n$, a relation value to be calculated is represented by Expression (2) below.

$$\text{Relation value} \; = \; \Sigma \, |a_n| c_n \qquad \text{------ (2)}$$

The relationship computation unit 106 may set a value to a manipulated variable, perform sensitivity analysis for determining how much a value of a control target variable changes when the value of the manipulated variable is changed, and output a degree of the change as a relation value. For example, the relationship computation unit 106 may count the number of manipulated variables that have caused a value of a control target variable to change when a set value is changed, and may output a value of the count as a relation value. In this case, the relationship computation unit 106 substitutes a value $v_n$ and a value $v_n + \Delta v_n$ for a manipulated variable $x_n$ in an expression of a model and determines whether $y_n$ changes or not.

The relationship computation unit 106 may create a coefficient matrix of a state equation by using coefficients multiplied to manipulated variables, determine controllability of the state equation, and output "1" when controllable or "0" when not controllable as a relation value. When a model is given including a state equation indicated in Expression (3) below, the relationship computation unit 106 determines controllability of the state equation depending on whether Expression (4) holds or not.

$$\dot{x} = Ax + Bu, \; A = \begin{bmatrix} a_{11} & \cdots & a_{m1} \\ \vdots & \ddots & \vdots \\ a_{1m} & \cdots & a_{mm} \end{bmatrix}, \; B = \begin{bmatrix} b_{11} & \cdots & b_{1l} \\ \vdots & \ddots & \vdots \\ b_{m1} & \cdots & b_{ml} \end{bmatrix} \qquad \text{------ (3)}$$

Herein, it is assumed that a manipulated variable is depicted by u, the number of manipulated variables is depicted by 1, each of variables (state variables) other than the manipulated variable is depicted by x, and the number of the variables is depicted by m.

$$\text{rank}[B \quad AB \quad \cdots \quad A^{m-1} B] = m \qquad \text{------ (4)}$$

Next, the selection unit 107 selects a model by using a result of the precision computation unit 105 and a result of the relationship computation unit 106. The selection unit 107 calculates an additional value of a result of a FIC (first index) and a value obtained by multiplying the number of manipulated variables in use (second index) by a coefficient (for example, FIC + (the number of manipulated variables in use)*500), selects a model having the highest additional value, and outputs the model.

The selection unit 107 may select a model having the largest information criterion from among models for which a result of the relationship computation unit 106 exceeds a predetermined threshold value. The selection unit 107 may multiply a computation result of the precision computation unit 105 by a computation result of the relationship computation unit 106 and select a model having the largest calculated value. The selection unit 107 may rank models by a result of the precision computation unit 105 and a result of the relationship computation unit 106, respectively, and select a model having the minimum result of combining the ranks.

The output unit 108 outputs the model selected by the selection unit 107 as a file.

<Example of Second and Third Example Embodiments>

Next, the model evaluation device 200 according to the second example embodiment is described with use of a specific example. In the present example, the model evaluation device 200 is connected with a control target device that is a target of control, in a manner similar to that in the model evaluation device 300 according to the third example embodiment. In addition, the model evaluation device 200 in the present example includes, instead of the output unit 108, the manipulation amount determination unit 309.

First, input states of a sensor connected with a control target device, a sensor acquiring a status of a surrounding environment, and a current control target device are input to the input unit 101 from the control target device and a peripheral device.

The input information is accumulated in the information accumulation unit 202. The accumulated information includes two pieces of information, which are information for model creation and information for model evaluation. For example, the accumulated information includes data for creation in the first fifty minutes of each hour and data for evaluation in the last ten minutes of each hour.

Next, the learning generation unit 203 creates a model based on the accumulated information. The learning generation unit 203 performs the same operation as that of the learning generation unit 103 in the preceding example. However, the learning generation unit 203 creates a model by using only the data for creation, rather than using all of the data accumulated in the information accumulation unit 102. The learning generation unit 203 does not use the data for evaluation.

In addition, in the present example, the model evaluation device 200 is connected with the control target device and information is successively added thereto. Thus, the learning generation unit 203 creates a model by using data from the past to a certain hours ago. Since information is successively added, the learning generation unit 203 may create a model every time certain information is accumulated.

The learning generation unit 203 accumulates the created model in the model accumulation unit 104.

Next, the precision computation unit 205 inputs the data for evaluation, which is not used by the learning generation unit 203, in a model from the data in the information accumulation unit 202, and acquires a predicted value of a control target variable in the model. The precision computation unit 205 compares the predicted value with the data saved in the information accumulation unit 102, obtains an error therebetween, and calculates a precision based on the error. In the present example, it is assumed that the precision is a value that is larger as the error is smaller. The precision computation unit 205 sums up squared errors and defines a reciprocal of the sum as the precision. The precision computation unit 205 may sum up absolute values of errors and define a reciprocal of the sum as the precision. Further, the precision computation unit 205 may define a reciprocal of the least value of an error as the precision.

The relationship computation unit 106 performs the same operation as that in the preceding example.

The selection unit 107 also performs the same operation as that in the preceding example. In other words, the selection unit 107 selects a model based on a result of the precision computation unit 205 and a result of the relationship computation unit 106. In a case of the present example, the selection unit 107 selects a model having the least error from among models for which a result of the relationship computation unit 106 exceeds a certain value. In addition, the selection unit 107 carries out model selection every time a new model is accumulated in the model accumulation unit 104, and selects the best model at a point in time.

Next, the manipulation amount determination unit 309 determines, based on the model selected by the selection unit 107, a value of a manipulated variable so as to bring a value of a control target variable close to an input target value, and outputs the value of the manipulated variable to the control target device. The manipulation amount determination unit 309 may search and output an optimum amount of control input manipulation by using a general method of an optimum problem. The manipulation amount determination unit 309 may also create a state equation based on the model, obtain a controller by using, for example, an optimal control theory or an H-infinity (H∞) control theory, and determine a value of a manipulated variable from the obtained controller, input data, and a value of a control target variable.

Finally, the manipulation amount determination unit 309 sends the value of the manipulated variable to the control target device and operates the control target device.

<Configuration Example of Model Evaluation Device>

Fig. 7 is a block diagram illustrating an example of a hardware configuration of a computer device 500 that implements each of the above-described model evaluation devices 100, 200, 300, and 400. The computer device 500 includes a processor 510, a memory 520, a storage 530, and an interface 540.

The processor 510 is, for example, one or a plurality of Central Processing Units (CPUs). The memory 520 and the storage 530 each store data. The storage 530 may include a reader/writer for a removable recording medium such as an optical disk and a flexible disk. The interface 540 exchanges data with an external device (such as a control device and an output device) directly or via a network.

[Industrial Applicability]

The present invention is not only applicable to control in an industrial process, but also applicable to environmental control for a building, a living space, and the like, and environmental control for agriculture, forestry and fisheries, a livestock industry, and the like. In addition, the present invention is also applicable to control of actuation of a manipulator, a land mobile object, an aquatic/underwater mobile object, an aerial mobile object, and the like. Further, the present invention is also applicable for use in communication, transportation, ordering and supplying, and financial transaction.

In the above, the invention of the present application has been described with reference to the example embodiments. However, the invention of the present application is not limited by the above example embodiments. Various modifications that can be understood by those skilled in the art can be made to the configurations and details of the invention of the present application within the scope of the invention of the present application.

This application is based upon and claims the benefit of priority from Japanese Patent Application No. 2014-197161, filed on September 26, 2014, the disclosure of which is incorporated herein in its entirety.

[Reference signs List]

    100, 200, 300, 400 Model evaluation device
    101 Input unit
    102, 202 Information accumulation unit
    103, 203 Learning generation unit
    104, 404 Model accumulation unit
    105, 205 Precision computation unit
    106, 406 Relationship computation unit
    107 Selection unit
    108 Output unit
    309 Manipulation amount determination unit

**Claims**

1. A model evaluation device comprising:

    model accumulation means that stores a model indicating relevance among a first variable that is an input parameter of control, a second variable that is a target of the control, and a third variable representing an operation environment of the control; and
    relationship computation means that calculates a relationship indicating a degree of influence given on the second variable by the first variable in the model.

2. The model evaluation device according to claim 1, wherein
the model accumulation means stores a plurality of the models, and
the model evaluation device further comprises:

    precision computation means that calculates a precision indicating a level of correctness of the model; and
    selection means that selects, based on the relationship and the precision, the model for the control from the plurality of the models.

3. The model evaluation device according to claim 1 or 2, wherein
the model includes a polynomial equation including the first variable, the second variable, and the third variable as variables and associated with the second variable, and
the relationship computation means calculates the relationship, based on the first variable with a non-zero coefficient included in the polynomial equation of the model.

4. The model evaluation device according to claim 1 or 2, wherein
the model includes a polynomial equation including the first variable, the second variable, and the third variable, associated with a control target variable, as variables and associated with the second variable, and
the relationship computation means calculates the relationship, based on a degree of change in the second variable associated with the polynomial equation of the model, when a value substituted for the first variable included in the polynomial equation is changed.

5. The model evaluation device according to any one of claims 1 to 4, wherein
the model includes a first-degree polynomial equation including the first variable, the second variable, and the third variable, associated with the second variable, as variables and associated with the second variable, and
the relationship computation means creates a coefficient matrix of a state equation by extracting a coefficient of the first variable included in the polynomial equation of the model, determines controllability based on the created state equation, and outputs presence or absence of the controllability as the relationship.

**6.** The model evaluation device according to claim 2, further comprising:

information accumulation means that stores a first history and a second history, storing a first variable, a second variable, and a third variable in association with one another; and

learning generation means that creates the plurality of the models based on the first history and stores the plurality of the models in the model accumulation means, wherein

the model includes the polynomial equation including the first variable, the second variable, and the third variable as variables and associated with the second variable, and

the precision computation means calculates a value of the second variable associated with the polynomial equation of the model from the polynomial equation and a value of the first variable, the second variable, or the third variable, included in the second history, calculates an error between the calculated value and a value of the second variable included in the second history, and outputs the calculated error as the precision.

**7.** A model evaluation method comprising:

storing a model indicating relevance among a first variable that is an input parameter of control, a second variable that is a target of the control, and a third variable representing an operation environment of the control; and

calculating a relationship indicating a degree of influence given on the second variable by the first variable in a model.

**8.** The model evaluation method according to claim 7, further comprising:

storing a plurality of the models,

calculating a precision indicating a level of correctness of the model, and

selecting a model for the control from the plurality of the models based on the relationship and the precision.

**9.** The model evaluation method according to claim 7 or 8, wherein

the model includes a polynomial equation including the first variable, the second variable, and the third variable as variables and associated with the second variable, and

the calculating calculates the relationship based on the first variable with a non-zero coefficient included in the polynomial equation of the model.

**10.** A computer-readable program recording medium that records a program for causing a computer to execute:

processing of storing a model indicating relevance among a first variable that is an input parameter of control, a second variable that is a target of the control, and a third variable representing an operation environment of the control; and

processing of calculating a relationship indicating a degree of influence given on the second variable by the first variable in the model.

Fig.1

100

MODEL EVALUATION DEVICE

INPUT UNIT 101

INFORMATION ACCUMULATION UNIT 102

LEARNING GENERATION UNIT 103

MODEL ACCUMULATION UNIT 104

PRECISION COMPUTATION UNIT 105

RELATIONSHIP COMPUTATION UNIT 106

SELECTION UNIT 107

OUTPUT UNIT 108

Fig.2

200

MODEL EVALUATION DEVICE

INPUT UNIT — 101

INFORMATION
ACCUMULATION
UNIT — 202

LEARNING
GENERATION UNIT — 203

MODEL
ACCUMULATION
UNIT — 104

PRECISION
COMPUTATION
UNIT — 205

RELATIONSHIP
COMPUTATION
UNIT — 106

SELECTION UNIT — 107

OUTPUT UNIT — 108

# Fig.3

300

MODEL EVALUATION DEVICE

INPUT DATA → | INPUT UNIT | 101

↓

| INFORMATION ACCUMULATION UNIT | 102

↓

| LEARNING GENERATION UNIT | 103

↓

| MODEL ACCUMULATION UNIT | 104

↓

| PRECISION COMPUTATION UNIT | 105    | RELATIONSHIP COMPUTATION UNIT | 106

↓

| SELECTION UNIT | 107

↓

TARGET VALUE → | MANIPULATION AMOUNT DETERMINATION UNIT | 309 → MANIPULATION AMOUNT

# Fig.4

400

MODEL EVALUATION DEVICE

404
MODEL
ACCUMULATION UNIT

406
RELATIONSHIP
COMPUTATION UNIT

# Fig.5

LEARNING DATA GENERATION STEP

MACHINE LEARNING STEP

DETERMINATION STEP

YES

NO

## Fig.6

$$X_a < \alpha_1$$

YES       NO

EXPRESSION 1

$$X_b < \alpha_2$$

YES       NO

EXPRESSION 2       EXPRESSION 3

## Fig.7

510 — PROCESSOR

500

520 — MEMORY

530 — STORAGE

INTERFACE — 540

## INTERNATIONAL SEARCH REPORT

| International application No. |
| --- |
| PCT/JP2015/004758 |

**A. CLASSIFICATION OF SUBJECT MATTER**
*G05B23/02*(2006.01)i, *G05B17/02*(2006.01)i

According to International Patent Classification (IPC) or to both national classification and IPC

**B. FIELDS SEARCHED**

Minimum documentation searched (classification system followed by classification symbols)
G05B23/02, G05B17/02

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2005/083531 A1 (Matsushita Electric Industrial Co., Ltd.), 09 September 2005 (09.09.2005), entire text & US 2006/0229739 A1 entire text & JP 3954087 B2 | 1-10 |
| A | JP 4821536 B2 (Denso Corp.), 24 November 2011 (24.11.2011), entire text & US 2008/0073057 A1 entire text & DE 102007045231 A1    & CN 101158496 A | 1-10 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 November 2015 (10.11.15) | 24 November 2015 (24.11.15) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (July 2009)

## INTERNATIONAL SEARCH REPORT

International application No.

PCT/JP2015/004758

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2013/183425 A1  (NEC Corp.), 12 December 2013 (12.12.2013), entire text (Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005083531 A
- JP 4821536 B
- WO 2013183425 A
- JP 2014197161 A

**Non-patent literature cited in the description**

- **RIKI ETO ; RYOHEI FUJIMAKI ; SATOSHI MORINAGA ; HIROSHI TAMANO;.** Fully-Automatic Bayesian Piecewise Sparse Linear Models. *JMLR Workshop and Conference Proceedings,* 2014, vol. 33, 238-246